# EUROPEAN PATENT APPLICATION

(11) **EP 1 621 564 A1**
(43) Date of publication of application: **01.02.2006**
(21) Application number: 04425561.0
(22) Date of filing: 26.07.2004
(51) Int. Cl.: C08G 18/38, C08G 18/30, C08K 3/34, C08J 9/00

(54) **Polyisocyanate and aqueous alkali silicate based coating formulation for use in sandwich panels**

(71) Applicant: HUNTSMAN INTERNATIONAL LLC, Salt Lake City, Utah 84108 (US)
(72) Inventor: Kuester, Joern, 21100 Varese (IT)
(74) Representative: Appoloni, Romano

(57) **Abstract**

Fire-resistant coating prepared by reacting an organic polyisocyanate with an aqueous alkali metal silicate solution and optionally a polyether polyol, suitable for use in sandwich panels.

## Description

The present invention relates to fire-resistant coating compositions and to laminated articles of improved fire resistance having a core of rigid foamed polymer material.

Rigid foams, because of their unusually good thermal insulation properties, find application in the fabrication of structural components for the building industry.

For instance, sandwich panels, manufactured in a continuous process, can be made by bonding steel, aluminium or foil stressed skin materials to polyurethane or polystyrene foam insulating cores.

Organic rigid insulation foams are by their nature combustible and sandwich panels containing organic insulation foams have limited performance in terms of fire resistance and reaction to fire.

In large-scale fire tests on sandwich panels, delamination of the exposed metal facing from the insulation core often occurs due to excessive heat; this can result in the foam core being more exposed and reduce the fire performance of the panel.

The requirements for panels with greater fire resistance is growing.

Various ways of improving the fire resistance of these laminates have been tried which include incorporating flame retardant additives in the foam itself and using intumescent layers and incombustible facing materials. Incombustible materials which have been used include asbestos cement board, steel, tempered glass, gypsum board and perlite board.

It is an object of the present invention to provide for a novel fire-resistant coating that can be used in sandwich panels.

It is a further object of the present invention to provide a fire-resistant sandwich panel containing an insulating core of rigid foamed polymer material, preferably polyurethane or polyisocyanurate foam, provided with such a coating.

It has surprisingly been found that these objects are obtainable with a coating prepared by reacting an aqueous alkali metal silicate solution and optionally a polyether polyol with an organic polyisocyanate.

This coating not only provides for outstanding fire-resistancy but also has extremely good adhesive properties and can be applied in a cost effective process.

Hence the current invention combines meeting higher fire performance requirements with the benefits of the superior insulation performance offered by organic insulation foams, in particular polyurethane and polyisocyanurate foams.

The commercially available aqueous alkali metal silicates, normally known as "waterglass" have been found to give satisfactory results. Such silicates can be represented as M₂O.SiO₂ where M represents an atom of an alkali metal and they differ in the ratio of M₂O:SiO₂.

It has been found that the sodium silicates are highly statisfactory and while the other alkali metal silicates, e.g. potassium and lithium silicates may be used they are less preferable on economic and performance grounds. Mixtures of sodium silicates and potassium silicates can be used as well; in such cases the ratio Na₂O/K₂O is preferably 99.5:0.5 to 25:75.

The molar ratio M₂O to SiO₂ is not critical and may fluctuate within the usual limits, i.a. between 4 and 0.2, more especially between 1.5 and 3. Using the preferred sodium silicate, the SiO₂:Na₂O weight ratio may vary, for example, from 1.6:1 to 3.3:1. However it is found generally to be preferable to employ a silicate of which the said ratio is within the range 2:1 to 3.3:1.

The concentration of the waterglasses used may readily be varied in accordance with the viscosity requirements or in accordance with the necessary water content, although it is preferred to use waterglasses having a solids content of from about 28 to 55 %, by weight, or waterglasses having a viscosity of less than 3000 mPa s, which is generally required for problem-free processing.

Examples of suitable commercially available waterglass are Crystal 0072, Crystal 0079 and Crystal 0100S (all Na based), available from INEOS Silicates and Metso 400 (K based), available from INEOS. Particular preference goes to Crystal 0100S.

It is also possible to make the silicate solution in situ by using a combination of solid alkali metal silicate and water.

The polyether polyols for use in the present coating formulation are obtained by ring-opening copolymerisation of alkylene oxides, such as ethylene oxide and/or propylene oxide, with isocyanate-reactive initiators of functionality 2 to 8.

The molecular weight of the polyether polyol is generally from about 1000 to about 10000, preferably from about 4000 to about 6000.

Suitable initiators include polyols, for example glycerol, polyethylene glycol, polypropylene glycol, diethylene glycol, ethylene glycol, triethylene glycol, water, propylene glycol, dipropylene glycol, trimethylene glycol, 1,2-, 1,3- and 1,4-butanediol, 1,2,6-hexanetriol, trimethylolethane, trimethylolpropane, triethanolamine, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine; and mixtures of such initiators. Preferred initiators are diols and triols, most preferably glycerol.

Preferably the polyether polyols for use in the present invention are made using propylene and ethylene oxide, as a block copolymer, as a random copolymer or, preferably, as an end cap (tip). The percentage of ethylene oxide units is preferably between 5 and 25 % by weight based on total alkylene oxides, most preferably between 9 and 18 % by weight. Using additional polyether polyol in the coating formulation substantially improves the adhesion of the coating to the substrates to be coated such as steel facings optionally provided with a primer.

Particularly preferred polyether polyols are DALTOLAC F428 available from Huntsman and Arcol 1374 available from BAYER, both glycerol-initiated polyether polyols of molecular weight 6000 and 15% ethyleneoxide tip.

The polyisocyanate used in the present coating formulation may comprise any number of polyisocyanates, including but not limited to, toluene diisocyanates (TDI), diphenylmethane diisocyanate (MDI) - type isocyanates, and prepolymers of these isocyanates. Preferably the polyisocyanate has at least two aromatic rings in its structure, and is a liquid product. Polymeric isocyanates having a functionality greater than 2 are preferred.

The diphenylmethane diisocyanate (MDI) used in the present invention can be in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, or any of their derivatives having a urethane, isocyanurate, allophonate, biuret, uretonimine, uretdione and/or iminooxadiazinedione groups and mixtures of the same.

A particularly preferred polyisocyanate for use in the present invention is polymeric MDI with a high NCO content (preferably between 25 and 34 wt%).

Examples of other suitable polyisocyanates are tolylene diisocyanate (TDI), hexamethylene diisocyanate (HMDI), isophorone diisocyanate (IPDI), butylene diisocyanate, trimethylhexamethylene diisocyanate, di(isocyanatocyclohexyl)methane, isocyanatomethyl-1,8-octane diisocyanate and tetramethylxylene diisocyanate (TMXDI).

Other suitable polyisocyanates for the invention are the semi-prepolymers and prepolymers which may be obtained by reacting polyisocyanates with compounds containing isocyanate-reactive hydrogen atoms. Examples of compounds containing isocyanate-reactive hydrogen atoms include alcohols, glycols or even relatively high molecular weight polyether polyols and polyester polyols, mercaptans, carboxylic acids, amines, urea and amides. Particularly suitable prepolymers are reaction products of polyisocyanates with monohydric or polyhydric alcohols, particularly the polyether polyols mentioned above.

The prepolymers are prepared by conventional methods, e.g. by reacting polyhydroxyl compounds which have a molecular weight of from 1000 to 10000, in particular mono- or polyhydroxyl polyethers with excess quantities of polyisocyanates, for example aliphatic, cycloaliphatic, araliphatic, aromatic or heterocyclic polyisocyanates.

In a particularly preferred embodiment of the invention prepolymers are used as the polyisocyanate component having an average functionality of 1.8 to 2.5, preferably 2.0 to 2.2, a maximum viscosity of 6000 mPa s at 20°C, and an isocyanate content of 8 to 31 wt%, preferably 13 to 25 wt%. Examples of particularly preferred prepolymers are SUPRASEC 2572 and SUPRASEC 2535, both available from Huntsman. Each of these prepolymers is based on MDI and polymeric MDI (p-MDI) as isocyanate component and ARCOL 1374 as polyol component; SUPRASEC 2572 having an NCO content of 23.1 wt% and SUPRASEC 2535 of 13.0 wt%.

The relative proportions of the alkali metal silicate, the polyether polyol and the polyisocyanate may be varied yielding products of different physical characteristics and probably differing chemical structure.

In general, it is desirable to employ an excess of the silicate and polyether polyol, i.e. a quantity greater than would be stoichiometrically equivalent to the polyisocyanate employed. On the other hand it is important not to use so little polyisocyanate that insufficient reaction occurs.

Typically the weight ratio between waterglass (having a SiO₂ content of ± 30%) and polyether polyol is between 2:1 and 8:1, preferably 2:1 and 6:1, more preferably about 3.8-4.1. The weight ratio waterglass + polyether polyol / polyisocyanate is between 2:1 and 7:1, preferably about 4.8-5.1.

Preferably the coating formulation is prepared by first thoroughly mixing waterglass and polyether polyol in the ratios mentioned above and allowing sufficient reaction time; subsequently an adequate amount of polyisocyanate is added to this mixture. The components react within a very short period of time (1 to 2 minutes) even without catalyst present.

The activity of the reaction mixture may be adjusted both through the isocyanate-silicate ratio and by using catalysts.

Examples of suitable catalysts are those known per se, including tertiary amines, such as triethyl-, tripropyl-; tributyl- and triamylamine, N-methyl morpholine, N,N-dimethyl cyclohexylamine, N,N-dimethyl benzylamine, 2-methyl imidazole, pyrimidine, dimethylaniline and triethylene diamine. Examples of tertiary amines containing isocyanate-reactive hydrogen atoms are triethanolamine and N,N-dimethyl ethanolamine.

Other suitable catalysts are silaamines having carbon-silicon bonds and nitrogen-containing bases such as tetraalkyl ammonium hydroxides; alkali hydroxides, alkali phenolates and alkali alcoholates. According to the invention organo metallic compounds, especially organo tin compounds, may also be used as catalysts.

A particularly preferred catalyst is 2,2'-dimorpholinodiethylether (commercially available from Huntsman Corporation under the tradename JEFFCAT DMDEE). Other preferrred catalysts include triethylene diamine (commercially available as DABCO EG from Air Products) and Catalyst LB (potassium acetate) available from Huntsman.

The catalysts are generally used in a quantity of from 0.001 to 10 % by weight, based on the total coating formulation.

The compositions of the present invention may include other optional components such as wetting agents, dispersing aids, thickeners, surfactants, blowing agents, pigments, fillers, flame retardants, defoaming agents and antimicrobial agents.

The fire performance of the coating can be further improved by adding flame retardants; expandable graphite being particularly preferred. Other examples include red phosphorous, melamine, polyammoniumphosphate and aluminiumhydroxide.

The amount of the flame retardant is generally between 1 and 35 % by weight based on the total formulation.

Fillers such as gypsum, carbonates and (portland) cement can help in extracting water from the coating layer thereby reinforcing the coating and increasing inorganic content. Examples of other suitable fillers include magnesium oxide or hydroxide, aluminum hydroxide, talc, chalk, dolomite, mica, apatite, kaolin, alkali metal silicates, hollow silicate beads, glass beads, fuel ash, antimony oxides and perlite.

The amount of the filler is generally between 1 and 30% by weight based on the total formulation.

If the coating formulation has a long pot-life then it can be applied manually by using brushes, rollers, notched trowels, coating knifes, roll coaters or by casting or spraying. Fast-reacting systems, however, have to be applied using meter-mix-dispense units and static mixers are adequate for low-volume application, but dynamic mixers are required for larger volumes.

The coating of the present invention finds application in various areas such as continuous panel-lamination, discontinuous panel-production (single, multiple-injection, lance-withdrawn).

The coating of the present invention can be applied as a flame barrier to various combustible materials such as sprayed polyurethane foam, wooden tiles.

Based on the same formulation ingredients a sealant can also be developed to be used as flame propagation barrier.

According to a particularly preferred embodiment of the present invention the coating is used in sandwich panels comprising an inner core insulator preferably based on rigid foamed polymer materials (preferred thickness between 4 and 25 cm) provided with facings of metal, gypsum or ceramics on one or both sides.

Rigid foamed polymers materials which may be used in the production of the laminated articles of the invention may be any such materials described in the prior art. Examples of these materials are polyurethane, polyisocyanurate, polyurea, polyolefin, polystyrene, phenolformaldehyde, epoxy and other polymeric foams.

The coating is provided between the facing and the inner core and effectively protects the inner core against the attack of heat and flames directed to the outside steel-facing and thereby significantly prolonging the time till the foam core is damaged. The thickness of the fire-resistant coating is generally 0.3 to 7 mm. The coating is generally applied by spraying or in the case of a filler-containing coating by a dispensing unit.

This will enable sandwich panels containing insulating foam cores to achieve fire resistance times currently only possible with sandwich panels based on non-combustible materials such as mineral wool.

Joints within the sandwich panel can also be sealed with the present coating.

The present coating can also be applied to a naked foam thereby protecting the foam against the impact of flames.

In a particularly preferred embodiment the waterglass coating of the present invention is used in a multilayer technique usually consisting of a thin waterglass coating 1 (preferred thickness 0.5 to 1 mm) and a thicker waterglass coating 2 (preferred thickness 1 to 5 mm). Coating 1 preferably contains 20 to 60 wt% of expandable graphite; coating 2 preferably contains fillers such as cement.

Composite materials in accordance with this invention possess many advantages. They are effective thermal insulators and have rigid structures with good reaction to fire and resistance to fire performance. The composites are also economical to manufacture (via a double belt lamination process).

Of special interest are laminates made from rigid polyurethane and rigid polyisocyanurate foams, and particularly those made continuously. Generally, these foams will have a density in the range of from 10 to 80 kg/m³. However, foams having higher densities, for example up to 1000 kg/m³ can also be used; these foams are usually prepared in a press or rigid mould by, for example, reaction injection moulding. If desired, the foams may contain conventional fire-retardant additives for example tris(halogenoalkyl)phosphates.

Laminated articles having a core of rigid foam can be made continuously or batchwise in a mould or former. The process of continuous lamination usually involves deposition of a foam-forming polymers mixture onto one of two facing sheets and bringing the second sheet into contact with the mixture before it sets and sometimes before it foams.

When the laminated article is to be in the form of a panel it may be produced batchwise in a suitably shaped mould as described above or continuously on any laminating machine suitable for the production of foam panel. Such machines are well known in the art and comprise conveying means for continuously advancing flexible or rigid sheet material, usually in a horizontal plane; a spray device or other distributor for depositing a foam mix evenly over the surface of the sheet material, even distribution being achieved either by employing a spreader, multiple spray devices or by reciprocating the spray device or other distributor transversely across the sheet material; and, if desired, means for bringing a second sheet material into contact with the foam before it has set or possibly before or during foaming. When the foam is formed between two facing sheets, the laminate will normally be transported and allowed to foam between two parallel conveyors, the conveyors being either maintained at a set distance apart or designed to exert a predetermined pressure on the foam.

The foam mix may even be deposited on the upper of two sheets which is inverted when the foam mix no longer flows under gravity but is still tacky and brought into contact with the lower sheet.

The extent to which the fire performance of the laminated article is upgraded will depend upon the thickness of the coating applied to the metal sheet, being in general higher the thicker the coating. However, a valuable feature of the invention is the need for only very thin coatings, for example coatings of thickness below 5 mm, e.g. 1 to 3 mm or less and it is in respect of such coatings that the valuable property of the coating in upgrading the fire performance is most apparent.

The various aspects of this invention are illustrated, but not limited by the following examples.

In these examples the following ingredients were used:
CRYSTAL 0100S: sodium waterglass (molar ratio Na₂O:SiO₂ 1:1.6-2.6) available from INEOS Silicates, containing 28.0-29.5 % silicate, having a density of 1.49 g/ml and a viscosity at 20°C of 380-420 mPa s.
SUPRASEC 5025: polymeric MDI (NCO 30.9%) available from Huntsman.
DABCO EG: amine catalyst available from Air Products.
ARCOL 1374: a polyether polyol of OH 28 mg KOH/g, initiated by glycerol and containing 15 % EO units, available from Bayer.
JEFFCAT DMDEE: 2,2'-dimorpholinodiethylether catalyst available from Huntsman.
DALTOLAC F428: a polyether polyol of OH 28 mg KOH/g, initiated by glycerol and containing 15 % EO units, available from Huntsman.
NORDMIN 251: expandable graphite available from Nordmann Rassman Hamburg.
SUPRASEC 2530: a mixture of p-MDI and a mixed MDI isomer, NCO 32%, available from Huntman.
DALTOCEL XF460: a polyether polyol of OH 30 mg KOH/g, initiated by dipropyleneglycol and containing 16 % EO units, available from Huntsman.
DEEP: diethylethylphosphonate fire retardant.
SUPRASEC 2388: an uretonimine modified MDI, NCO 30%, available from Huntsman.
SUPRASEC 2572: a prepolymer of NCO content 23.1 %, based on MDI/p-MDI and 26 wt% ARCOL 1374, available from Huntsman.
SUPRASEC 2029: a prepolymer of NCO content 24.5 % based on MDI and 5 wt% tripropyleneglycol, available from Huntsman.
SUPRASEC 2535: a prepolymer of NCO content 13.0 % based on MDI/p-MDI and 56 wt% ARCOL 1374, available from Huntsman.

### Example C1

To 190 g of CRYSTAL 0100S were added 190 g of SUPRASEC 5025. Both substances were mixed using a mechanical mixer at ca. 3000 rpm for 30 seconds. The mixture was then poured on a metal sheet (steel, La Magona 0.4 mm thick, back-primer) and distributed 3 mm thick. After 5 minutes the mixture started to separate, no reaction was taking place.

### Example C2

190 g of CRYSTAL 0100S were blended under stirring with 1.9 g of DABCO EG. To the resulting mixture 190 g of SUPRASEC 5025 were added and mixed for 10 seconds by a mechanical mixer. The reaction mixture was poured on a metal sheet and distributed as a 3 mm thick layer.

After ca. 3 minutes the layer cured resulting in a rigid and brittle, layer with pour adhesion to the metal. After ca. 1 day the metal sheet was delaminated from the coating showing a white powder on the metal surface.

### Example C3

To 190 g of CRYSTAL 0100S were added under stirring 1.9 g of DABCO EG. To the resulting mixture 126 g of the prepolymer SUPRASEC 2572 were added and mixed for 10 seconds by a mechanical mixer. The reaction mixtures was poured on a metal sheet and distributed as a 3 mm thick layer. The layer is hardening within 2 minutes forming a rigid layer with very good initial and long-term adhesion properties.

### Example C4

190 g of CRYSTAL 0100S were blended under stirring with 0.7 g of JEFFCAT DMDEE. To the resulting mixture 95 g of the prepolymer SUPRASEC 2535 was added and mixed for 10 seconds by a mechanical mixer at 3000 rpm. The reaction mixture was poured as a 3 mm thick coating on a metal sheet.

The layer hardened within 2 minutes forming a rigid layer with very good initial and long-term adhesion properties.

### Example C5

190 g of CRYSTAL 0100S were blended under stirring with 0.7 g JEFFCAT DMDEE. To this mixture 127 g of the prepolymer SUPRASEC 2029 was added and stirred for 10 seconds with a mechanical mixer at 3000 rpm. The reaction mixture was distributed as a 3 mm thick layer on a metal sheet. The resulting layer cured within a few minutes, was slightly friable and did not adhere very well. After a few days the layer delaminated from the metal due to a white-powder formation on the metal-facing.

### EXample C6

To 190 g of CRYSTAL 0100S were added 25 g of ARCOL 1374 and stirred for 30 sec with a mechanical mixer (3000 rpm). To this mixture 50 g of SUPRASEC 5025 were added and mixed for 5 seconds with a mechanical mixer. The resulting reaction mixture was distributed as a 3 mm thick layer on a metal sheet. Reaction took place within 20 seconds. The layer was cured within 90 seconds creating a very good adhering layer with some flexibility, maintaining its very good adhering properties for a long period of time.

### Example C7

190 g of CRYSTAL 0100S, 40 g of DALTOLAC F428, 20 g of NORDMIN 251 and 50 g of SUPRASEC 2530 were mixed together for 15 seconds by a mechanical mixer at 3000 rpm. The reaction mixture was distributed as a 3 mm thick layer on a metal sheet. Reaction started within 30 sec and a cured layer was formed within 90 sec.

### Example C8

50 g of DALTOCEL XF460, 5 g of JEFFSOL propylenecarbonate, 10 g of DEEP and 100 g of Portland-Cement were mixed together by a mechanical mixer for 10 sec. Subsequently 190 g of CRYSTAL 0100S and 50 g of SUPRASEC 2388 were added and instantly mixed for 15 sec with a mechanical mixer at 3000 rpm. The reaction mixture was distributed as a 3 mm thick-layer on a metal-sheet. The layer adhered very well to the metal and cured within 90 sec. The layer kept its good adhering properties for a long period of time.

### Example C9

50 g of DALTOCEL XF460 and 50 g of Portland-Cement were mixed together by a mechanical mixer for 10 sec. Subsequently 190 g of CRYSTAL 0100S and 50 g of SUPRASEC 2388 were added and instantly mixed for 15 sec with a mechanical mixer at 3000 rpm. The reaction mixture was distributed as a 3 mm thick layer on a metal sheet. The layer adhered very well to the metal and cured within 90 sec. The layer kept its good adhering properties for a long period of time.

### Panel examples

Sandwich panels with dimensions 40 x 40 cm - thickness of foam 10 cm - were prepared by foaming either on the uncoated metal sheet or on metal sheet coated as in examples C3 to C9 above (coating facing towards the foam). Two different foam systems representing typical foam-systems used in the industry were used to produce the samples (see table below).

Foam-system 1: DALTOFOAM TR 32251 (n-pentane-blown,B2, PIR-system, Index 200) applied density 40 g/l available from Huntsman.

Foam-system 2: DALTOFOAM TR 33200 (245fa-blown, PIR-system, Index 350) applied density 40 g/l; available from Huntsman.

The samples were exposed to a propane-torch (flame attacking the metal facing); distance to the metal facing 10 cm. Directly flamed surface area had a diameter of ca. 20 cm. To examine the damaged foam-depth the panel was cut after cooling down and the visibly damaged (char, brown foam) foam depth was measured in the center of the burnt-area.

The results are presented in the table below.

| Coating-example | Foam-System | Burn-time | Depth damage |
|---|---|---|---|
| | | min | cm |
| uncoated metal | 1 | 7 | 4.7 |
| C3 | 1 | 7 | 3.7 |
| C4 | 1 | 7 | 3.9 |
| C6 | 1 | 7 | 3.2 |
| C7 | 1 | 7 | 3 |
| C8 | 1 | 7 | 2.4 |
| C9 | 1 | 7 | 2.6 |
| Uncoated metal | 2 | 10 | 6.1 |
| C3 | 2 | 10 | 4 |
| C4 | 2 | 10 | 4.5 |
| C6 | 2 | 10 | 2.6 |
| C7 | 2 | 10 | 2.2 |
| C8 | 2 | 10 | 2.1 |
| C9 | 2 | 10 | 2.4 |

### Example on multilayer-technique

The formulation for the thin coating layer (0.5 mm) consists of 30 pbw SUPRASEC 2572, 30 pbw of Nordmin 251 (expandable graphite), 0.4 pbw of DABCO EG and 45 pbw CRYSTAL 0100S.

The formulation for the thicker coating layer (3 mm) consists of 38 pbw CRYSTAL 0100S and 10 pbw of ARCOL 1374 to which are added under mixing 20 pbw of cement and 10 pbw of SUPRASEC 5025.

Coating layer 1 is applied first on the primer-side of a metal facing and subsequently coating 2 is applied on top of coating 1. The insulating foam layer is applied on top of coating layer 2.

## Claims

1. Polyisocyanate based coating obtainable by reacting an aqueous alkali metal silicate solution and optionally a polyether polyol with an organic polyisocyanate.

2. Coating according to claim 1 wherein the alkali metal silicate is a sodium silicate, preferably having a SiO₂:Na₂O weight ratio from 1.6:1 to 3.3:1.

3. Coating according to claim 1 or 2 wherein the polyether polyol is obtained by reacting propylene oxide and ethylene oxide with a diol or triol, preferably glycerol.

4. Coating according to claim 3 wherein the EO content is 5 to 25 % by weight based on total alkylene oxides, preferably provided as an end cap.

5. Coating according to any one of the preceding claims wherein the polyisocyanate is an aromatic liquid polyisocyanate.

6. Coating according to claim 5 wherein the polyisocyanate is diphenylmethane diisocyanate or a derivative thereof.

7. Coating according to any one of the preceding claims wherein the weight ratio between aqueous alkali metal silicate solution and polyether polyol is between 2:1 and 6:1.

8. Coating according to any one of the preceding claims wherein the weight ratio between aqueous alkali metal silicate solution plus polyether polyol and polyisocyanate is between 2:1 and 7:1.

9. Reaction mixture for preparing a polyisocyanate based coating as defined in any one of the preceding claims comprising an aqueous alkali metal silicate solution, optionally a polyether polyol and an organic polyisocyanate.

10. Insulation layer having on at least one side a coating as defined in any one of claims 1 to 8.

11. Sandwich panel comprising an insulation layer having on at least one side a facing **characterised in that** at least one coating as defined in any one of claims 1 to 8 is provided between the insulation layer and the facing.

12. Panel according to claim 11 wherein the insulation layer comprises polyurethane or polyisocyanurate foam.

13. Panel according to claim 11 or 12 wherein the facing is of metal, gypsum or ceramics.

14. Panel according to any one of claims 11 to 13 wherein at least 2 coatings are provided, a thin coating of thickness 0.5 to 1 mm optionally containing 20 to 60 wt% expandable graphite and a thicker coating of thickness 1 to 5 mm optionally containing fillers.
